# EUROPEAN PATENT APPLICATION

(11) **EP 3 270 561 A1**
(43) Date of publication of application: **17.01.2018**
(21) Application number: 16382334.7
(22) Date of filing: 14.07.2016
(51) Int. Cl.: H04L 29/06, H04W 12/02, H04W 76/02, H04L 29/08, H04L 12/707

(54) **METHOD AND SYSTEM FOR PROVIDING LAWFUL INTERCEPTION IN A PEER TO PEER COMMUNICATION**

(71) Applicant: Telefonica Digital España, S.L.U., 28013 Madrid (ES)
(72) Inventor: LANTZ, Johan, 28013 Madrid (ES)
(74) Representative: Herrero & Asociados, S.L.

(57) **Abstract**

Present invention refers to a method and a system for providing lawful interception in a peer to peer communication (P2P) over a telecommunication network comprising establishing a first media path, between a first and second communication devices, for a media stream through a central node of the telecommunication network; looking for a second media path, between the first and second communication devices, through a P2P connection; in case of the P2P connection is found, duplicating the media stream; transmitting the duplicated media stream both to the central node and through the P2P connection; and reproducing the duplicated media stream transmitted through the P2P connection.

## Description

### TECHNICAL FIELD OF THE INVENTION

Present invention generally relates to lawful interception of communications and more specifically to communications between communication devices of a telecommunication network which take advantage of peer to peer media while still complying with lawful interception requirements of mobile operators.

### BACKGROUND OF THE INVENTION

The most optimal way to communicate in a VoIP network is to have a peer to peer (P2P) audio connection between the two (or more clients). Having the media path established directly between the peers is both faster and cheaper than the alternative of routing the audio through a central node. However, nowadays many calls still terminate in a PSTN number making P2P traffic impossible since the audio has to go through the operator's network and so, providers obliged to abide with lawful interception regulation must route the audio connection through a central node capable to capture the media.

Prior art offers some solutions like document US20080220754 which describes a system and method for lawful intercept of call content in which a media forking command to a media transfer element transmitting RTP (Real-time Transport Protocol) data. The media transfer element receives the media forking command and provides duplicates of RTP data packets associated with the subscriber transmitted through the media transfer element for transmission to a Lawful Interception function. Thus, the method includes a duplication of the RTP flow in a network element, through which said flow traverses.

The problem with these methods relying on network elements to fork the call traffic to Lawful Interception function is that they require the call traffic to traverse said network elements and thus is not appropriate for systems in which the call flow is exchanged peer-to-peer (P2P), thus, in those cases said methods are not valid. Even in dual systems in which the call can be performed either P2P or through a network element, the legal requirement to provide the interception capability would prevent the P2P case, which may be more optimal or even the only viable for instance if there are restrictions in terms of maximum end-to-end latency.

Therefore, prior art is missing a method for providing lawful interception while introducing P2P traffic allowing telecommunications based services to both comply with lawful interception requirements at the same time as offering the end user the best possible call quality.

### SUMMARY OF THE INVENTION

Present invention solves the aforementioned problems by enabling a method for providing lawful interception of peer to peer communications over a telecommunication network comprising the steps of:
a) establishing a first media path, between a first and second communication devices, for a media stream through a central node of the telecommunication network;
b) looking for a second media path, between the first and second communication devices, through a P2P connection;
c) in case of the P2P connection is found, duplicating the media stream at the first communication device;
d) transmitting the duplicated media stream from the first communication device both to the central node and through the P2P connection to the second communication device;
e) reproducing, by the second communication device, the duplicated media stream transmitted through the P2P connection.

According to one particular embodiment of the invention, duplicating the media stream comprises the steps of:
- intercepting a RTP packet of the media stream at a media stack of the first or second communication devices;
- duplicate the intercepted RTP packet.

After duplicating the media stream, transmitting it both to the central node and through the P2P connection comprises, according to one particular embodiment of the invention, sending from the first or second communication devices the duplicated intercepted RTP packet both to the central node and to the other communication device through the P2P connection. Thus, RTP packets are intercepted and duplicated before any transmission from the communication device.

Additionally, present invention may consider activating a marker bit on each RTP packet sent to the central node, where marked RTP packets are stopped at the central node. Thus, advantageously, the flow of the media stream is controlled.

One particular embodiment of the invention may further consider discarding the duplicate RTP packets received at a jitter buffer of the first or second communication device. Thus advantageously, it is avoided the problem of receiving two media flows at a communication device.

According to one particular embodiment of present invention, duplicating the media stream comprises establishing at the first or second communication device, two parallel independent media streams, a first media stream through the central node and second media stream through the P2P connection.

Optionally, present invention consider in one embodiment packing two or more audio frames into a RTP packet of the first media stream. Thus, advantageously bandwidth usage is reduced.

Present invention may consider, according to one particular embodiment, encoding the first media stream with a first codec and encoding the second media stream with a second codec, wherein the first and the second codec are different.

Optionally, according to one particular embodiment, present invention may comprise activating a voice activity detection function (VAD) on the first media stream.

The first media stream may be muted at the first or second communication device receiving the media stream through the central node.

Optionally, in case of the media stream transmitted through the P2P connection suffer certain degradation, present invention may consider reproducing the media stream transmitted through the central node as a backup solution.

One particular embodiment of present invention further comprises activating a marker bit on each RTP packet of the first media stream, where marked RTP packets are stopped at the central node.

Present invention, according to one particular embodiment of the invention, may further comprise recording, by the central node, a conversation contained into the media stream.

According to one embodiment of present invention the central node is a lawful interception capable node and the media stream is an audio stream.

Another aspect of present invention refers to a system for providing lawful interception in a peer to peer communication (P2P) over a telecommunication network comprising:
- a first communication device configured for establishing a first media path with a second communication device, for a media stream through a central node; looking for a second media path, with the second communication device, through a P2P connection; in case of the P2P connection is found, duplicating the media stream; transmitting the media stream both to the central node and directly to the second communication device through the P2P connection;
- a second communication device configured for receiving media streams both through the central node and through the P2P connection and reproducing the media stream transmitted through the P2P connection.
- a central node configured for receiving the duplicated media stream from the first communication device.

A last aspect of present invention refers to a computer program product comprising computer program code adapted to perform the method according to any of the claims 1-13 when said program code is executed on a computer, a digital signal processor, a field-programmable gate array, an application-specific integrated circuit, a micro-processor, a micro-controller, or any other form of programmable hardware.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a drawing wherein, by way of illustration and not restrictively, the following has been represented:
Figure 1.- (prior art) shows an example of a current audio path through central relay providing lawful interception of a communication under a typical scenario.
Figure 2.- shows a diagram of one embodiment of the invention where the outgoing RTP packets destined for the central node are intercepted in the media stack of the communication device and cloned.
Figure 3.- shows a diagram of one embodiment of the invention where a secondary independent media path is established between the peers, like a parallel call.

### DETAILED DESCRIPTION OF THE INVENTION

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

Present invention discloses a method for providing lawful interception in a peer to peer communication between two communication devices where, once a communication device has verified a working P2P media path, the media stream is duplicated already on device level.

The default behavior for a common VoIP client (prior art) always tries to enable P2P traffic, because the end to end media latency will be much lower, but also since routing the audio through a central node is expensive. In order to discover the media path over the public internet NAT traversal has to be performed by any known methods such as STUN (Session Traversal Utilities for NAT) and TURN protocol, which are combined into the ICE protocol, where STUN is used for discovering the public IP address of the device for potential P2P traffic and TURN is used as a last resort acting as a media relay when P2P traffic cannot be established. However, for a provider that has to comply with lawful interception regulations having P2P media is not an option. This problem affects all VoIP or Video calling providers.

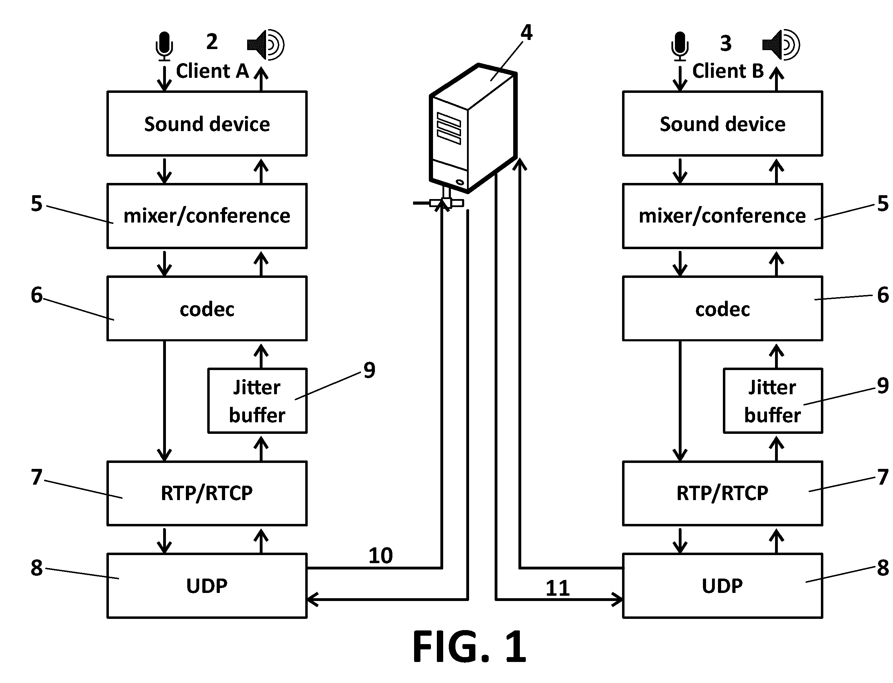

**Figure 1** shows an example of a current audio path through central relay (TURN like) providing lawful interception of a communication under a typical scenario. A first communication device (2) initiates a media stream, for example by receiving an input by a microphone, and then the media stream is passed to a mixer (5) and a codec (6). After coding the media stream, the coded media stream is passed to an RTP/RTCP module (7) and being sent (10) to the central relay (4) using UDP (8). The central relay is enabled for providing lawful interception of the communication initiated by the first communication device and for routing (11) the communication to the second communication device (3), where the process is in reverse order. The media stream is received by the second communication devices under the same protocols UDP and RTP/RTCP and buffered in a jitter buffer (9) before arriving to the codec (6) and mixer (5) modules and finally being reproduced by a sound device, as a speaker, of the second communication device. Of course, this process may be carried out in both directions.

Present invention aims to provide the features from both worlds, lawful interception from the telco world and P2P media from the Over-the-Top world. The approach proposed does not modify the original behavior, on the contrary, during the call establishment phase it is beneficial to establish a media path through the central node since this offers almost guaranteed success in establishing a media path (without the additional delay added by the ICE protocol when discovering and verifying the potential P2P routing options). So, instead of performing the full ICE resolution the existing call setup flow is maintained. Then, once the media path is established (through the central node) present invention investigates whether a P2P media path can be established. There are multiple ways to solve this such as using parts of the ICE protocol; using a proprietary mechanism like sending information about a public IP address inside of the RTP frames that are already being exchanged (through the central node); or extending the signaling protocol to use a mechanism similar to ICE but directly instructing the clients to send media to two peers.

One of the advantages of a proprietary solution using custom RTP signaling is that the need for the backend to support propagation of the ICE information in the signaling path is removed. For a standard client (based on SIP or any other protocol) this might not be a factor, since signaling will most likely be exchanged peer to peer already but in a system that integrates with a PSTN network direct signaling between the two peers may not be possible.

Present invention, as it has been mentioned before, reverses the standard way of establishing media and once the call is established through a central node, the method of present invention tries to find a direct media path between two clients. The challenge arise if a direct media path between the two clients is established, in this scenario it is beneficial for the clients to move towards using the direct route instead of the one established through a central node. For a pure Over-the-Top (OTT) client, like Whatsapp or Skype, this is the option used since it both reduces cost and latency. However for any system bound to lawful interception requirements the media cannot be released from the central node, which makes the P2P connection a non viable option.

Therefore, present invention proposes a solution where, once the device has verified a working P2P media path, it will duplicate the media stream already on device level. This can be done in several ways according to different embodiments of the invention, but two options are proposed below:

### Embodiment 1: Packet interception and cloning

One particular embodiment of the invention proposes packet interception and cloning as solution for duplicating the media stream at device level.

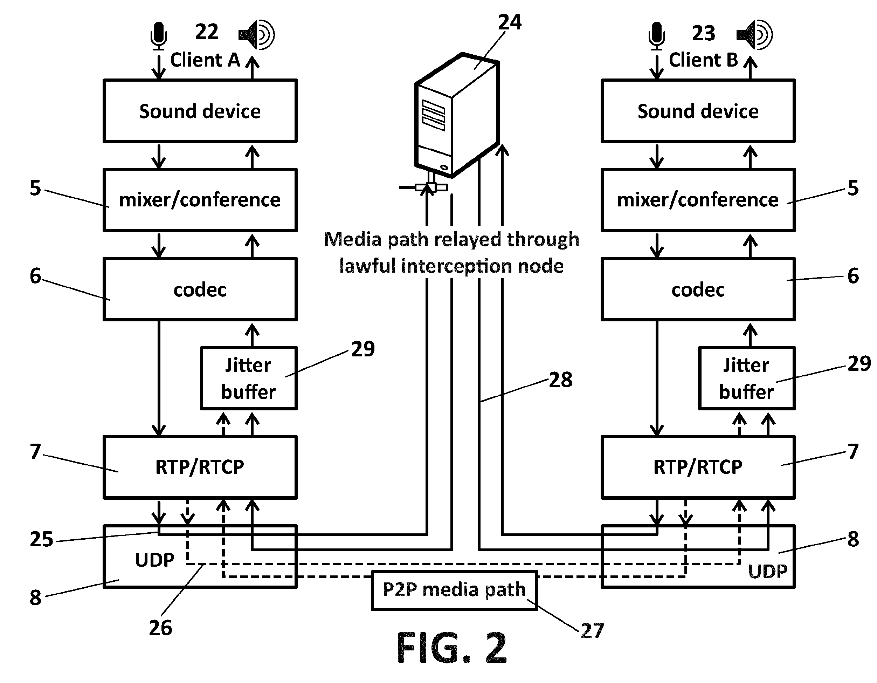

**Figure 2** shows a diagram of this approach, which is similar to the scheme of figure 1 until the media stream arrives to RTP/RTCP module (7), but with this approach the outgoing RTP packets destined for the central node are intercepted in the media stack of the communication device (22). Then, the RTP packets are cloned and after cloning them the two resultant media streams (25, 26) are sent both to the central (lawful interception capable) node (24) as always as well as directly to the remote peer (23). Then, on the receiving end, this operation is reversed injecting the RTP packets received over the direct path (27) into the existing RX flow (28) receiving media from the relay. It has to be noted that in the RX direction, two media flows might be received, but since they both represent the same RTP flow using the same RTP sequence numbers, the jitter buffer (29) in the receiving client (23) will automatically take care of discarding the duplicate and out of order packets (normally coming from the relayed media path due to the higher latency).

By performing this operation present invention offers the advantages of P2P media providing the best possible quality in this call while still complying with local regulations. Additionally, the flow traversing the central node can be routed to a Lawful Interception Function which records the conversation.

Some benefits implied by this approach are:
- The lawful interception requirements are not broken since the audio is always flowing through the central relay at all times.
- If P2P traffic is successfully established, this is the audio path that will finally be reproduced by the clients guaranteeing a much lower latency, less jitter and less packet loss which in turn ensures a much better call quality leading to higher overall Average Call Duration values.
- Since the RTP packets are intercepted and cloned before they are transmitted to the central node, no additional load is imposed for encoding and decoding the media using the direct path. The extra load for transmitting and receiving the direct path may be deemed insignificant and irrelevant in most cases, as bit rates for voice signals is very low with regards to bit rates of other commonly used services (e.g. video) and represent a very small portion of usual mobile data plan allowances.
- In the transmission (TX) direction there is no further impact after intercepting the outgoing RTP packets and forwarding them to a secondary destination.
- Since two unique media flows are not produced, but instead the original one is cloned, it is guaranteed that it is the exact same data being sent to the relay server for lawful interception as it is being sent to the remote peer for being reproduced.
- Given that the packets are intercepted in transmission (TX) and injected in reception (RX), no additional load is added on the communication device for performing encoding, decoding or echo cancellation.
- Even though the relayed media path will have a significantly longer latency, optionally, present invention may introduce redundancy. Thus, if the direct path suffers from some degradation, temporal or permanent, the relayed path will offer a backup solution.

### Embodiment 2: Independent secondary media path

One particular embodiment of the invention proposes an independent secondary media path as solution for duplicating the media stream at device level.

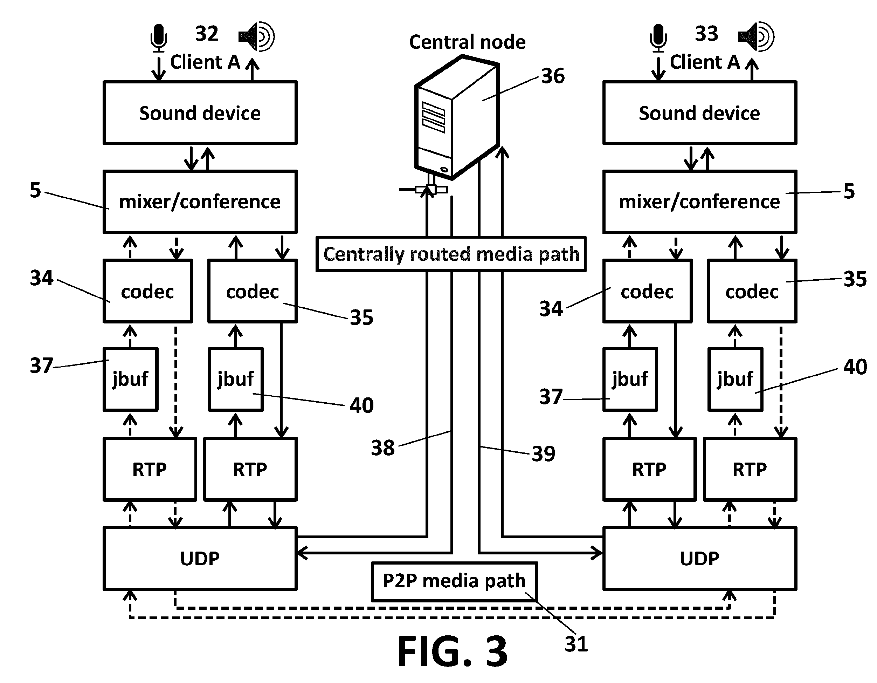

**Figure 3** shows a diagram of this approach, which is similar to the scheme of previous figure 2, but instead of cloning the RTP packets, a secondary independent media path (31) is established between the peers (32, 33), like a parallel call. With this approach it would still be the exact same audio samples being processed by the communication device (32), but two separate and individual media streams are encoded even with different codecs (34, 35). Thus, the embodiment of figure 3 proposes a solution where the media stream, for example an audio stream, is split in two individual flows, each one with the potential to use its own codec. For instance, in order to use a bandwidth efficient narrowband codec for the path going to the central node (36), while the P2P path (31) might use a more resource intense wideband codec.

A centrally routed media path (38) arrives to the central node (36), which is lawful interceptor capable. The packets flowing through this centrally routed media path may include indications of said packets are also flowing through the P2P path (31), so it can be determined that they are not further forwarded to the second communication device (33).

Alternatively, the media stream (38) received by the central node can be forwarded (39) to the second communication device (33). It has to be noted that, with this approach the jitter buffer (29) of figure 2 cannot be used to control the media flow since there will be two different media streams operating individually, each with its own jitter buffer (37, 40). Instead the path (38, 39) going through the central node will have to be muted in the receiving end as long as audio is coming through the P2P path (31). If the P2P path (31) would suddenly fail, the path (38,39) taking the central route would naturally still serve as a backup option.

This solution could be applied also to existing systems, such in the case of VoLTE, where a client could send a second INVITE once the call is established through the central node. This second INVITE would apply a specific format instructing both clients that if they manage to establish a direct media path as well, the whole system will start working as described above.

Naturally, both embodiment 1 and embodiment 2 above come with the minor fallback of increased bandwidth usage. However given the obvious advantages for the end user this fact has a very minor importance. If data usage is a real issue, this feature can easily be restricted/configured to only activate under certain conditions, e.g. when on WiFi connections to avoid excessive consumption of mobile data. Even in calls employing two parallel streams, both using a wideband codec (such as AMR-WB or Opus) the total bandwidth consumed is still less than what a codec used over years without any issue such as PCMA uses by default for a single media stream. Moreover, most VoIP applications today offer also Video calling which uses 700kbit/s and upwards, while a dual media stream voice call would only use between 20 and 40kbit/s.

Another option considered by a particular embodiment of the invention goes with bandwidth reduction techniques, as RTP ptime increase, where "ptime" refers to the length of time in milliseconds represented by the media in a RTP packet. An audio frame usually takes 20 msec, so in order to minimize the mouth to ear latency, each audio frame is encoded and put into its own packet for transmission over the Internet. Normally in VoIP this encapsulation is done using the RTP protocol, which means that every 20 msec a new RTP packet is transmitted, each with its own overhead for the underlying UDP and IP protocols. A standard audio packet would be like the following:

| | | | |
|---|---|---|---|
| IP | UDP | RTP | 20 msec |

Therefore, according to one embodiment of present invention, in order to drastically reduce the increased bandwidth introduced by the stream duplication, several audio frames are packed into each RTP packet sent to the central node. For the sake of lawful interception the increased latency introduced by doing this is irrelevant, since audio does not need to be reproduced in real time for lawful interception. For instance by putting seven encoded 20 msec audio frames into each RTP packet the overhead from 6 UDP/IP headers is eliminated instantly. This is very relevant since the UDP+IP part of a single audio frame packet accounts for 40% to 60% of the total data transmitted. An example of bandwidth saving configuration packing seven 20 msec audio frames into a single UDP packet drastically reducing the overhead needed for the duplicate transmission towards the central node is reproduced below:

| | | | | | | | | | | | | | | | |
|---|---|---|---|---|---|---|---|---|---|---|---|---|---|---|---|
| IP | UDP | RTP | 20msec | RTP | 20msec | RTP | 20msec | RTP | 20msec | RTP | 20msec | RTP | 20msec | RTP | 20msec |

One embodiment of the invention also considers voice detection techniques. High quality codecs, like Opus, does not recommend activation VAD (Voice Activity Detection) by default since the codec is adaptive by nature and VAD always comes with a small quality penalty, but, following with the second embodiment of the present invention disclosed above, there is the option of using a fairly aggressive VAD on the media path terminating in the lawful interception node. This will eliminate TX traffic if the user is not talking, bringing the aggregated "cost" for this path even closer to insignificance, even when on a non WiFi connection.

Present invention also considers controlling the flow between the client and the central node.
When there is a working P2P connection between the two clients there is no strict need for the central node to forward the lawfully intercepted media path to each receiving client. The important part is to record each leg of the conversation, not to forward it to the peers. Thus, in order to further improve present invention, all RTP packets going to the central node may be marked with a specific flag using the extension header offered by the RTP protocol. Each RTP packet can include a small amount of extra information between the normal header and the payload without breaking the standard. In this extension header the clients will set a marker bit as long as it can verify that media is flowing through a P2P connection. Then as longs as the central node sees that this bit is set, it can choose to not forward the intercepted media packets to the remote peer. **Figure 3** shows an example flow of two individual media streams where media packets (38) terminate in the central node (31) thanks to the marker indicating a working P2P media path (31). With this approach, the extra bandwidth used in the downlink from the central node to the clients is completely eliminated. Naturally this optimization applies also for embodiment 1 of present invention disclosed above (Packet interception and cloning).

## Claims

1. Method for providing lawful interception in a peer to peer communication (P2P) over a telecommunication network comprising the steps of:
a) establishing a first media path, between a first and second communication devices, for a media stream through a central node of the telecommunication network;
b) looking for a second media path, between the first and second communication devices, through a P2P connection;
c) in case of the P2P connection is found, duplicating the media stream at the first communication device;
d) transmitting the duplicated media stream from the first communication device both to the central node and through the P2P connection to the second communication device;
e) reproducing, by the second communication device, the duplicated media stream transmitted through the P2P connection.

2. Method according to claim 1 wherein duplicating the media stream comprises:
- intercepting a RTP packet of the media stream at a media stack of the first or second communication devices;
- duplicate the intercepted RTP packet;

3. Method according to claim 2 wherein step d) comprises sending from the first or second communication devices the duplicated intercepted RTP packet both to the central node and to the other communication device through the P2P connection.

4. Method according to any one of claims 2-3 further comprising activating a marker bit on each RTP packet sent to the central node, where marked RTP packets are stopped at the central node.

5. Method according to any one of claims 2-3 further comprising discarding the duplicate RTP packets received at a jitter buffer of the first or second communication device.

6. Method according to claim 1 wherein duplicating the media stream comprises establishing at the first or second communication device, two parallel independent media streams, a first media stream through the central node and second media stream through the P2P connection.

7. Method according to claim 6 further comprising packing two or more audio frames into a RTP packet of the first media stream.

8. Method according to any one of claims 6-7, further comprising encoding the first media stream with a first codec and encoding the second media stream with a second codec, wherein the first and the second codec are different.

9. Method according to any one of claims 6-8 further comprising activating a voice activity detection function (VAD) on the first media stream.

10. Method according to any one of claims 6-9 further comprising muting the first media stream, at the first or second communication device receiving the media stream through the central node.

11. Method according to any one of claims 1-3 and 6-10, where in case of the media stream transmitted through the P2P connection suffer a certain degradation, further comprising reproducing the media stream transmitted through the central node.

12. Method according to any one of claims 6-9 further comprising activating a marker bit on each RTP packet of the first media stream, where marked RTP packets are stopped at the central node.

13. Method according to any one of previous claims further comprising recording, by the central node, a conversation contained into the media stream.

14. System for providing lawful interception in a peer to peer communication (P2P) over a telecommunication network comprising:
- a first communication device configured for establishing a first media path with a second communication device, for a media stream through a central node; looking for a second media path, with the second communication device, through a P2P connection; in case of the P2P connection is found, duplicating the media stream; transmitting the media stream both to the central node and directly to the second communication device through the P2P connection;
- a second communication device configured for receiving media streams both through the central node and through the P2P connection and reproducing the media stream transmitted through the P2P connection.
- a central node configured for receiving the duplicated media stream from the first communication device.

15. Computer program product comprising computer program code adapted to perform the method according to any of the claims 1-13 when said program code is executed on a computer, a digital signal processor, a field-programmable gate array, an application-specific integrated circuit, a micro-processor, a micro-controller, or any other form of programmable hardware.
